# EUROPÄISCHE PATENTSCHRIFT

(11) **EP 0 874 140 B1**
(45) Veröffentlichungstag und Bekanntmachung des Hinweises auf die Patenterteilung: **07.02.2001**
(21) Anmeldenummer: 98106820.8
(22) Anmeldetag: 15.04.1998
(51) Int. Cl.: F01M 11/03

(54) **Kühler-Filter-Anordnung**
Cooler and filter apparatus
Dispositif pour filtrer et pour refroidir

(30) Priorität: 23.04.1997 DE 19717018
(43) Veröffentlichungstag der Anmeldung: 28.10.1998
(73) Patentinhaber: Modine Manufacturing Company, Racine, Wisconsin 53403-2552 (US); FILTERWERK MANN+HUMMEL GMBH, 71631 Ludwigsburg (DE)
(72) Erfinder: Brost, Viktor, Dipl.-Ing., 72631 Aichtal (DE); Pavlin, Jaroslav, D-71691 Freiberg (DE); Jainek, Herbert, D-74074 Heilbronn (DE)
(74) Vertreter: Wolter, Klaus-Dietrich

(56) Entgegenhaltungen:
- EP-A- 0 200 809
- EP-A- 0 631 804
- EP-A- 0 800 850
- DE-A- 3 444 267
- JP-A- 6 185 332
- US-A- 4 638 856

## Beschreibung

Die Erfindung betrifft eine Kühler-Filter-Anordnung, bei der der Kühler und der Filter übereinander angeordnet und von einem Gehäuse eingeschlossen sind, mit den weiteren Merkmalen aus dem Oberbegriff des Anspruchs 1.
Eine solche Anordnung ist beispielsweise aus dem EP 0 631 804 B1 bekannt. Bei dieser Anordnung hat man zur Vermeidung der Vermischung des Kühlmittels mit dem zu kühlenden Mittel, beispielsweise Getriebeöl, entsprechende Vorkehrungen getroffen. Dort sind zu diesem Zweck im unteren Bereich, wo die Anordnung an dem Getriebegehäuse angeschlossen ist und im mittleren Bereich, wo der Übergang vom Wärmetauscher zum Filter liegt, jeweils zwei ringförmige elastische Dichtringe angeordnet. Zwischen den beiden Dichtringen hat das Gehäuse mindestens eine Bohrung, so daß durch den Austritt von Flüssigkeit durch diese Bohrung frühzeitig das Nachlassen der Dichtwirkung signalisiert wird. Die Dichtungen können in diesem Fall ausgetauscht werden, bevor sich Wasser und Öl vermischen. Eine solche, durch das deutsche Gebrauchsmuster 92 02 865.9 (Fig. 6) schon vor dem EP 0 631 804 bekanntgewordene Dichtungsanordnung, besitzt also eine Kontrollfunktion. Nachteilig ist der durch die Dichtungen verursachte kostenmäßige Aufwand, der nicht nur durch die Dichtungen selbst sondern auch durch die in den Dichtungsbereichen angeordneten horizontalen Trennplatten mit den Bezugszeichen 11 und 17 hervorgerufen wird. Ferner muß die Trennplatte 11 durch eine umlaufende Abstufung im Gehäuse in ihrer Position festgelegt sein. Darüber hinaus unterliegen elastische Dichtungen einem Alterungsprozeß und sind demzufolge nur über einen bestimmten Zeitraum wirksam.

Eine weitere dem Oberbegriff nahe kommende Anordnung ist aus JP-A- 6-185332 bekannt. Der dort vorgesehene Kühler ist hinsichtlich seiner Befestigung im Gehäuse aufwendig.

Ausgehend von diesen Nachteilen besteht die Aufgabe der Erfindung darin, die Kühler -Filter-Anordnung so weiterzubilden, daß bei Beibehaltung der sicheren Funktionsweise der Aufwand gesenkt wird.
Die erfindungsgemäße Lösung erfolgt mit den Merkmalen aus dem Kennzeichen des Anspruchs 1. Die Ansprüche 2 bis 5 betreffen Weiterbildungen und Varianten.
Es ist vorgesehen, daß in das Gehäuse ein gehäuseloser Kühler eingesetzt ist, dessen Flüssigkeitseinlässe und - auslässe in der Grundplatte des gehäuselosen Kühlers angeordnet sind. Allein durch das Vorsehen aller Ein-und Auslässe an der Unterseite kann der Herstellungsaufwand reduziert werden. Ferner haben seitlich am Gehäuse angeordnete Anschlußstutzen oft Probleme hinsichtlich der Dichtigkeit. Zur Anschlußplatte bzw. zur Unterseite hin sind die Ein-und Auslässe für das zu kühlende Mittel mittels elastischer Dichtringe gegeneinander abgedichtet. Im Inneren des Kühlers ist eine vorzugsweise zentrisch verlaufende Durchgangsöffnung angeordnet, die dem Rücklauf des vom Filter kommenden Mittels dient. Über dieser Durchgangsöffnung ist ein Anschluß für den Filter angeordnet. Der Anschluß kann eine axiale und/oder eine radiale Dichtfläche aufweisen. Die Deckplatte ist gemäß dem gewählten Anschluß ausgebildet. Vorzugsweise ist die Deckplatte des gehäuselosen Kühlers ein tiefgezogenes Teil, bei dem der Anschluß gleich mit angeformt ist.

Es ist aber auch möglich, den Anschluß dadurch auszubilden, daß sich eine Hülse in der Durchgangsöffnung befindet, die einen Überstand über die Oberseite des Kühlers aufweist. Der an der Unterseite des Filters vorstehende Kragen nimmt den Überstand der Hülse in sich auf. Diese Variante dürfte allerdings die etwas ungünstigere sein, weil die Hülse ein zusätzliches Teil darstellt. Einfacher ist die zuerst beschriebene Variante, die hier auch den Vorteil des gehäuselosen Kühlers zum Tragen bringt, weil die einzelnen Platten des Kühlers selbstverständlich auch zur Durchgangsöffnung hin dicht verlötet sind und somit die Hülse entbehrlich machen.
Ferner besitzt die Deckplatte mindestens eine Austrittsöffnung, durch die das gekühlte und danach zu filternde Mittel in den Filter eintreten kann. Dabei ist an dieser Stelle überhaupt keine Dichtung erforderlich. Der gesamte gehäuselose Kühler kann außen, in dem ringförmigen Raum zwischen dem Kühler und dem Gehäuse, von dem zu kühlenden Mittel umspült werden, ohne daß es deshalb zu einer Vermischung der Medien käme. Hier stellt sich außerdem der Vorteil ein, daß durch die somit vergrößerte wärmeaustauschende Oberfläche eine höhere Kühlleistung erreicht werden kann. Die Befestigung des gehäuselosen Kühlers in dem Gehäuse erfolgt entweder mittels einer in der Durchgangsöffnung angeordneten Hohlschraube oder aber durch als Gewindestutzen ausgebildete Anschlüsse, auf die eine Schraube gedreht wird. Die Gewindestutzen sind in den Einlaßöffnungen und in den Auslaßöffnungen dicht eingelötet.
Das äußere Gehäuse ist aus einem Stück hergestellt, so daß es auch keinen abzudichtenden unteren Bereich zwischen den beiden Medienseiten oder der Innen-und Außenseite gibt. Die Abdichtung zwischen den Medien erfolgt vorliegend ausschließlich durch metallische Trennung innerhalb des gehäuselosen Kühlers, dessen innerer Aufbau allgemein bekannt ist und der deshalb hier nicht weiter beschrieben werden muß. Die einzelnen Platten des gehäuselosen Kühlers sind allseitig miteinander verlötet. Da der Kühler vor Einbau einer Dichtprüfung mittels hoher Prüfdrücke unterzogen wird, die im Betrieb normalerweise nicht auftreten, ist sichergestellt, daß er seine Dichtigkeit auch während des Betriebes beibehält. Die Dichtigkeit und die ordnungsgemäße Funktion der Kühler-Filter-Anordnung wird über eine längere Lebensdauer aufrechterhalten als sie beim Stand der Technik erreichbar ist.
Wegen der nicht notwendigen Dichtungen besteht auch keine Notwendigkeit, das Gehäuse der Kühler-Filter-Anordnung mit einer umlaufenden Abstufung auszubilden. Das Gehäuse kann sich mit gleichmäßigem Durchmesser über seine gesamte Länge bzw. Höhe erstrecken, wodurch ein weiterer Beitrag zur Kostensenkung geleistet wird.
Der Filter kann ein Einwegfilter sein, der nach einer gewissen Gebrauchszeit ausgetauscht und entsorgt wird.
Weitere Merkmale können sich aus den Patentansprüchen ergeben sowie aus der nachfolgenden Beschreibung von Ausführungsbeispielen. Diese werden unter Bezugnahme auf die beiliegenden Zeichnungen erläutert.
Es zeigen:
- Fig. 1: Gesamtdarstellung der Kühler-Filter-Anordnung
- Fig. 2: Teil eines Schnittes durch Kühler (Ölseite) und Filter
- Fig. 3: Draufsicht auf den gehäuselosen Kühler von Fig. 2
- Fig. 4: Schnitt durch einen anderen Kühler (Wasserseite)
- Fig. 5: Draufsicht auf den Kühler von Fig. 4

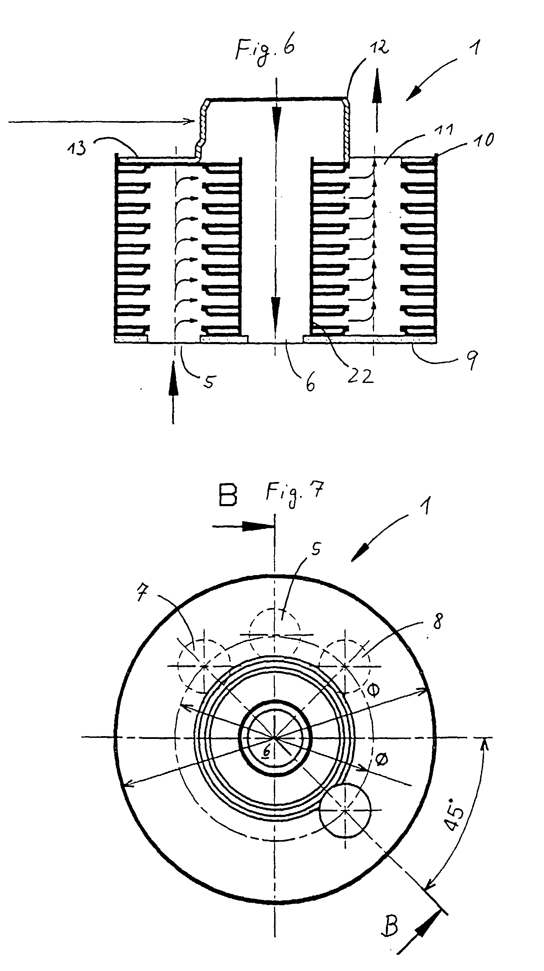

- Fig. 6: Schitt durch den Kühler aus Fig.1
- Fig. 7: Draufsicht auf den Kühler von Fig. 6

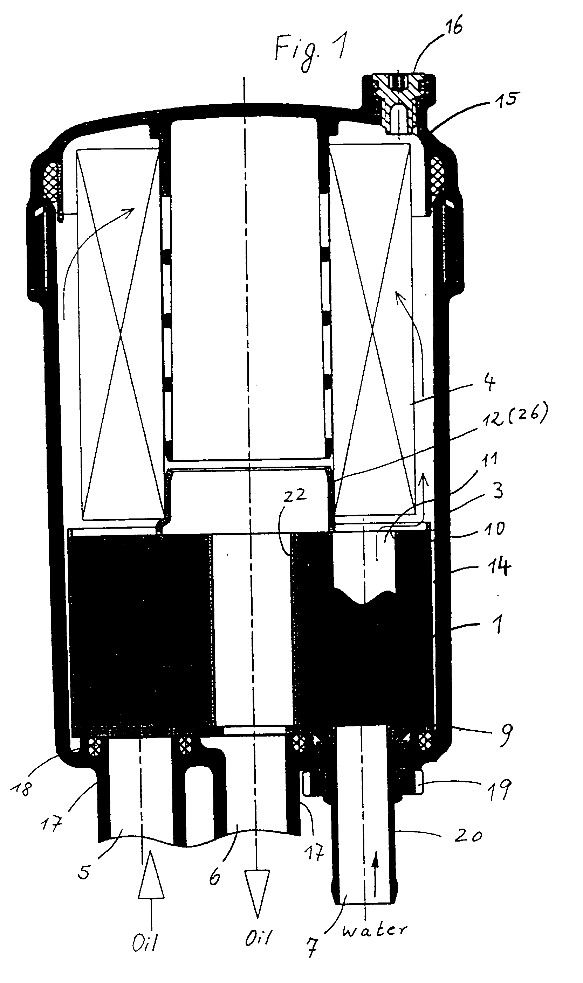

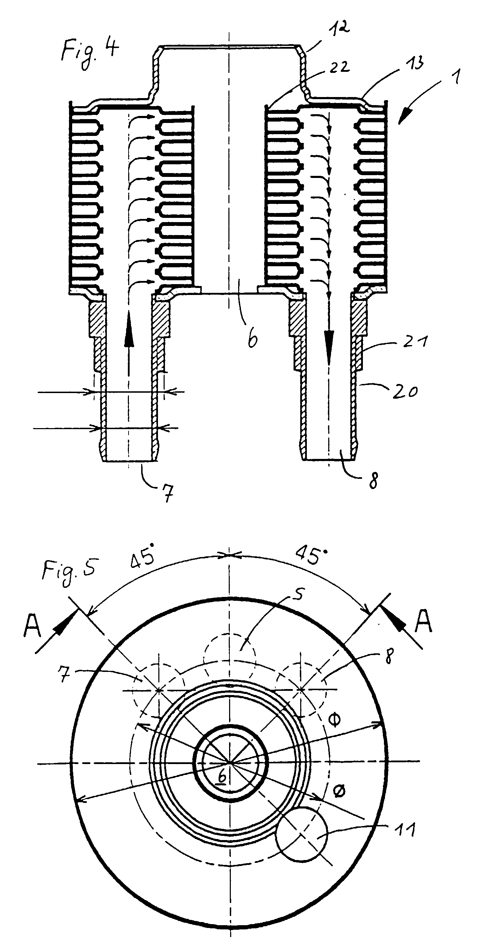

Die Kühler-Filter-Anordnung ist zur Getriebeölkühlung eines Fahrzeuges vorgesehen. Sie besteht nach Fig. 1 aus einem durchgehenden Gehäuse 3. Das Gehäuse 3 ist einstückig mit einem nicht detailliert dargestellten Getriebegehäuse 17 mit Öleintritt 5 und Ölaustritt 6 ausgebildet. Zwischen dem Öleintritt 5 und der Unterseite 9 des gehäuselosen Kühlers 1 sowie zwischen dem Ölaustritt 6 und der Unterseite 9 des gehäuselosen Kühlers 1 befinden sich Dichtungen 18. Diese Dichtungen 18 werden hier nicht benötigt, um zwischen der Öl- und der Wasserseite zu trennen, sondern sie sorgen hier lediglich dafür, daß die Vermischung von einströmendem warmem Öl mit ausströmendem abgekühltem Öl verhindert wird. Sollten diese Dichtungen 18 in ihrer Dichtwirkung nachlassen wird die Funktion in keiner Weise gefährdet.
Der Wassereintritt 7 besitzt hier einen Gewindestutzen 20, der an der Unterseite 9 des gehäuselosen Kühlers 1 dicht angelötet ist und dessen Gewindeabschnitt 21 (Fig. 4) eine Mutter 19 aufnimmt, um den gehäuselosen Kühler 1 innerhalb des Gehäuses 3 zu befestigen. Dazu wird die Mutter 19 auf die durch Öffnungen im Gehäuse 3 ragenden Gewindestutzen 20 geschraubt. In Fig. 1 ist nur ein Gewindestutzen 20 mit Mutter 19 gezeigt. Der in Fig. 4 dargestellte Schnitt zeigt beide Gewindestutzen 20 mit ihren Gewindeabschnitten 21.
Der gehäuselose Kühler 1 hat an seiner Oberseite 10 einen zentrischen Anschluß 12 und eine Austrittsöffnung 11 für das Öl. Der Anschluß 12 bzw. Anschlußstutzen 26 ist hier als ein gezogenes Bauteil aus der Deckplatte 13 ausgeformt. Der Ölfilter 4 ist in Fig. 1 auf dem Anschlußstutzen 26 aufgesteckt, mit einer ausreichenden Dichtigkeit, um das aus der Austrittsöffnung 11 austretende Öl zunächst, gemäß den eingezeichneten Pfeilen, zur Durchströmung des Ölfilters 4 zu veranlassen, bevor es durch die zentrale Filteröffnung und die zentrale Durchgangsöffnung 22 im Kühler 1 zum Ölaustritt 6 gelangt. Am oberen Ende des Gehäuses 3 befindet sich ein abschraubbarer Deckel 15 mit einer Entlüftungsschraube 16. Der leicht entfernbare Deckel dient dem Auswechseln des Filters 4 bzw. zum Einsetzen des gereinigten Filters 4.
Zwischen dem gehäuselosen Kühler 1 und dem Gehäuse 3 ist ein Ringraum 14 ausgebildet, der sich mit Öl auffüllen kann, ohne daß es dadurch zur Vermischung zwischen Öl und Wasser käme.

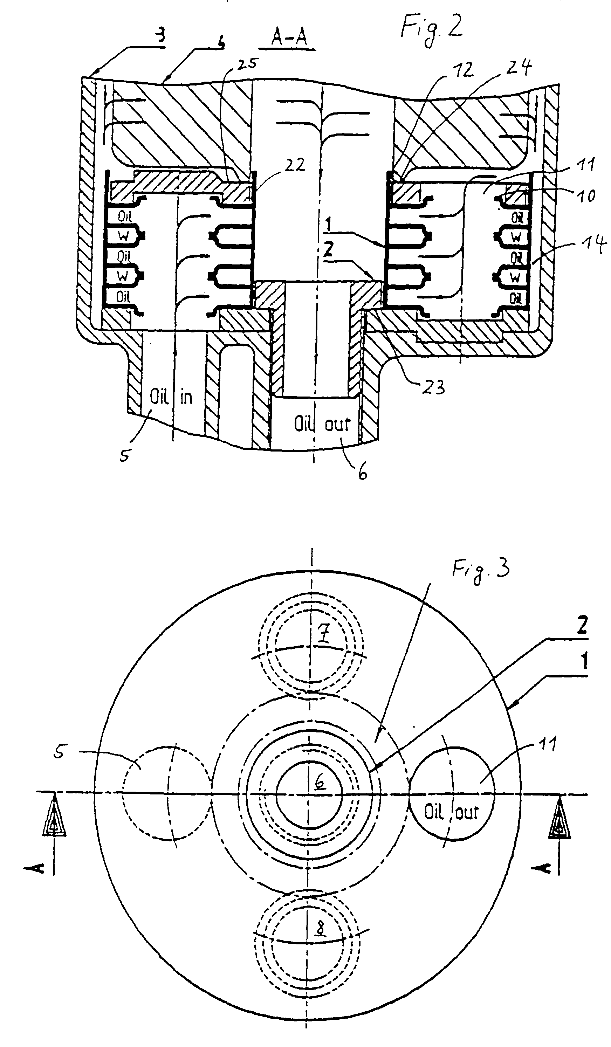

Aus der Fig. 2, aus der unter anderem zu erkennen ist, in welcher Weise das Öl den gehäuselosen Kühler 1 durchströmt, geht darüber hinaus eine andere Befestigung des gehäuselosen Kühlers 1 in dem Gehäuse 3 sowie eine anderer Anschluß 12 zum Ölfilter 4 hervor. Zur Befestigung wurde hier eine kurze zentrale Hohlschraube 2 gewählt, die sich in der Durchgangsöffnung 22 befindet. Die Hohlschraube 2 hat einen überstehenden Bund 23, der beim Eindrehen der Hohlschraube 2 den gehäuselosen Kühler 1 fest im Gehäuse 3 verankert. Der Anschluß 12 für den Ölfilter 4 ist hier ganz einfach dadurch herbeigeführt worden, daß die Deckplatte 13 einen hier allerdings nur geringen Überstand über den gehäuselosen Kühler 1 und eine horizontal um die Durchgangsöffnung 22 umlaufende Filterauflagefläche 25 aufweist und der Ölfilter 4 um seine zentrale Öffnung mit einem vorstehenden Kragen 24 ausgebildet ist, so daß der Ölfilter 4 durch Andrücken auf die Filterauflagefläche 25 mit ausreichender Dichtigkeit befestigt werden kann. Die Strömungskanäle für Wasser und Öl wechseln sich ab und sind in der Fig. 2 mit "W" und "Oil" bezeichnet worden. Jede denkbare andere Anordnung der Strömungskanäle ist möglich. Es ist hier allerdings zweckmäßig, den obersten Strömungskanal für Öl vorzusehen, um die Austrittsöffnung 11 auf einfache Weise mit dem Öl-Strömungskanal zu verbinden.
Die Fig. 3 zeigt die Draufsicht des Kühlers 1 aus Fig. 2, in dessen Zentrum die Hohlschraube 2 angeordnet ist.
Die Fig. 4 bildet die Durchströmung des Kühlers 1 auf der Wasserseite ab. Ferner wurde hier im Unterschied zu den Fig. 2 und 3 die vorne bereits beschriebene Befestigungsvariante über die Gewindestutzen 20 am Wassereintritt 7 und Wasseraustritt 8 ausgewählt. Welche Befestigungsart letztendlich zu bevorzugen ist, wird von den örtlichen Gegebenheiten bzw. den Kundenwünschen abhängen. Das gleiche trifft auf die Position des Öleintritts 6 sowie des Wassereintritts und - austritte 7 und 8 zu, wie der Vergleich der Fig. 3 und 5 zeigt.

### Liste der verwendeten Bezugszeichen

- 1: gehäuseloser Kühler
- 2: Hohlschraube
- 3: Gehäuse
- 4: Filter
- 5: Öleintritt
- 6: Ölaustritt
- 7: Wassereintritt
- 8: Wasseraustritt
- 9: Unterseite Kühler
- 10: Oberseite Kühler
- 11: Ölaustrittsöffnung
- 12: Anschluß
- 13: Deckplatte
- 14: Ringspalt
- 15: Deckel
- 16: Entlüftungsschraube
- 17: Getriebegehäuse
- 18: Dichtungen
- 19: Schraube
- 20: Gewindestutzen
- 21: Gewindeabschnitt am Stutzen 20
- 22: Durchgangsöffnung
- 23: Bund an Hohlschraube 2
- 24: Kragen am Filter
- 25: Filterauflagefläche
- 26: Anschlußstutzen
- W: Strömungskanal für Wasser im Kühler 1
- Oil: Strömungskanal für Öl im Kühler 1

## Patentansprüche

1. Kühler-Filter-Anordnung zum Anbau an ein Getriebegehäuse (17) bei der der von einem Kühlmittel und einem zu kühlenden Mittel durchströmte Kühler und der das gekühlte Mittel filternde Filter übereinander angeordnet und von einem Gehäuse (3) eingeschlossen sind, wobei der Kühler eine vorzugsweise zentrale Durchgangsöffnung (22) zum Rücklauf des gekühlten und gefilterten Mittels aufweist und sich abwechselnde Strömungskanäle (W, Oil) für den Wärmeaustausch zwischen dem Kühlmittel und dem zu kühlenden Mittel besitzt,
daß die Ein-und Auslässe (5; 6; 7; 8) für das Kühlmittel und für das zu kühlende Mittel an der Unterseite (9) des Kühlers (1) ausgebildet und abgedichtet sind, dessen Oberseite (10) in der Deckplatte (13) mindestens eine Austrittsöffnung (11) für das gekühlte Mittel und einen Anschluß (12) für den Rücklauf aus dem Filter (4) besitzt,
daß der Zulauf des gekühlten Mittels in den Filter (4) durch die Austrittsöffnung (11) vorgesehen ist und,
dadurch gekennzeichnet, daß
der Kühler ein gehäuseloser Kühler (1) mit einer Deckplatte (13) und einer Unterseite (9) ist, zwischen denen sich die durch Platten gebildeten Strömungskanäle (W, Oil) befinden, die zur Durchgangsöffnung (22) und zu einem zwischen dem Kühler (1) und dem Gehäuse (3) vorgesehenen durchgehenden äußeren Ringraum (14) mittels Löten abgedichtet sind,
daß die Befestigung des gehäuselosen Kühlers (1) im Gehäuse (3) entweder mittels einer in der Durchgangsöffnung (22) positionierten Hohlschraube (2) an der Unterseite (9) oder mittels Gewindestutzen (20) erfolgt, die im Einlaß (7) und im Auslaß (8) für das Kühlmittel eingelötet sind und eine Mutter (19) aufnehmen.

2. Kühler-Filter-Anordnung nach Anspruch 1, dadurch gekennzeichnet, daß der Anschluß (12) als Anschlußstutzen (26) oder als horizontal umlaufende Filterauflagefläche (25) einstückig mit der Deckplatte (13) ausgebildet ist.

3. Kühler-Filter-Anordnung nach den Ansprüchen 1 und 2, dadurch gekennzeichnet, daß der Filter (4) auf dem Anschlußstutzen (26) aufgesteckt ist oder mit dem überstehenden Kragen (24) auf der horizontalen Filterauflagefläche (25) aufliegt.

4. Kühler-Filter-Anordnung nach einem der vorstehenden Ansprüche, dadurch gekennzeichnet, daß das Gehäuse (3) über seine Gesamtlänge den gleichen Durchmesser aufweist.

5. Kühler-Filter-Anordnung nach einem der vorstehenden Ansprüche, dadurch gekennzeichnet, daß das Gehäuse (3) einstückig mit dem Dichtungen (18) aufnehmenden Getriebegehäuse (17) ausgebildet ist.

## Claims

1. Cooler/filter arrangement for mounting on a transmission case (17), in which arrangement the cooler, through which flow a coolant and a medium to be cooled, and the filter filtering the cooled medium are arranged one above the other and are enclosed by a housing (3), the cooler having a preferably central passage orifice (22) for the return of the cooled and filtered medium and possessing alternating flow ducts (W, Oil) for heat exchange between the coolant and the medium to be cooled, the inlets and outlets (5; 6; 7; 8) for the coolant and for the medium to be cooled being formed and sealed off on the underside (9) of the cooler (1), the top side (10) of which possesses in the cover plate (13) at least one outflow orifice (11) for the cooled medium and a connection (12) for return from the filter (4), and the inflow of cooled medium into the filter (4) being provided by the outflow orifice (11), characterized in that the cooler is a no-housing cooler (1) with a cover plate (13) and an underside (9), between which are located the flow ducts (W, Oil) which are formed by plates and which are sealed off by means of soldering relative to the passage orifice (22) and to a continuous outer annular space (14) provided between the cooler (1) and the housing (3), and in that the no-housing cooler (1) is fastened in the housing (3) either by means of a hollow screw (2) positioned in the passage orifice (22) on the underside (9) or by means of threaded nipples (20) which are soldered in the inlet (7) and in the outlet (8) for the coolant and which receive a nut (19).

2. Cooler/filter arrangement according to Claim 1, characterized in that the connection (12) is designed as a connecting nipple (26) or as a horizontally peripheral filter bearing surface (25) in one piece with the cover plate (13).

3. Cooler/filter arrangement according to Claims 1 and 2, characterized in that the filter (4) is slipped on the connecting nipple (26) or rests with the projecting collar (24) on the horizontal filter bearing surface (25).

4. Cooler/filter arrangement according to one of the preceding claims, characterized in that the housing (3) has the same diameter over its entire length.

5. Cooler/filter arrangement according to one of the preceding claims, characterized in that the housing (3) is produced in one piece with the transmission case (17) which receives gaskets (18).

## Revendications

1. Dispositif pour filtrer et pour refroidir, destiné à être rapporté sur un carter de boîte de vitesses (17), dans lequel le refroidisseur parcouru par un fluide de refroidissement et un fluide à refroidir et le filtre filtrant le fluide refroidi sont disposés l'un au-dessus de l'autre et sont contenus dans un carter (3), le refroidisseur présentant une ouverture de passage (22) de préférence centrale pour le retour du fluide refroidi et filtré et possédant des canaux d'écoulement alternés (eau, huile) pour l'échange de chaleur entre le fluide de refroidissement et le fluide à refroidir,
les entrées et sorties (5; 6; 7; 8) pour le fluide de refroidissement et pour le fluide à refroidir étant formées au niveau de la face inférieure (9) du refroidisseur (1) et étant rendues étanches, la face supérieure (10) du refroidisseur possédant, dans la plaque de recouvrement (13), au moins une ouverture de sortie (11) pour le fluide refroidi et un raccord (12) pour le retour de l'écoulement depuis le filtre (4), l'apport du milieu refroidi dans le filtre (4) étant réalisé par l'ouverture de sortie (11),
caractérisé en ce que
le refroidisseur est un refroidisseur (1) sans carter muni d'une plaque de recouvrement (13) et d'une face inférieure (9), entre lesquelles se trouvent les canaux d'écoulement (eau, huile) formés par des plaques, qui sont rendus étanches par rapport à l'ouverture de passage (22) et par rapport à un espace annulaire extérieur traversant (14) prévu entre le refroidisseur (1) et le carter (3) au moyen de soudures,
en ce que la fixation du refroidisseur (1) sans carter dans le carter (3) est effectuée soit au moyen d'une vis creuse (2) positionnée dans l'ouverture de passage (22) au niveau de la face inférieure (9), soit au moyen de tubulures filetées (20) qui sont soudées dans l'entrée (7) et dans la sortie (8) pour le fluide de refroidissement et qui reçoivent un écrou (19).

2. Dispositif pour filtrer et pour refroidir selon la revendication 1, caractérisé en ce que le raccord (12) est formé d'une pièce avec la plaque de recouvrement (13) en tant que tubulure de raccord (26) ou en tant que surface d'appui périphérique horizontale (25) du filtre.

3. Dispositif pour filtrer et pour refroidir selon les revendications 1 et 2, caractérisé en ce que le filtre (4) est enfiché sur la tubulure de raccord (26) ou repose avec le rebord saillant (24) sur la surface d'appui horizontale (25) du filtre.

4. Dispositif pour filtrer et pour refroidir selon l'une quelconque des revendications précédentes, caractérisé en ce que le carter (3) présente le même diamètre sur toute sa longueur.

5. Dispositif pour filtrer et pour refroidir selon l'une quelconque des revendications précédentes, caractérisé en ce que le carter (3) est formé d'une pièce avec le carter de boîte de vitesses (17) recevant des joints d'étanchéité (18).
